Europäisches Patentamt

**European Patent Office**

Office européen des brevets

(19)

(11) Numéro de publication: **0 185 583**
**B1**

(12) FASCICULE DE BREVET EUROPEEN

(45) Date de publication du fascicule du brevet:
06.09.89

(51) Int. Cl.⁴: **C 04 B 20/10**

(21) Numéro de dépôt: **85402391.8**

(22) Date de dépôt: **03.12.85**

(54) Granulats légers améliorés convenant dans le domaine du bâtiment et des travaux publics et leur procédé d'obtention.

(30) Priorité: 04.12.84 FR 8418678

(43) Date de publication de la demande:
25.06.86 Bulletin 86/26

(45) Mention de la délivrance du brevet:
06.09.89 Bulletin 89/36

(84) Etats contractants désignés:
AT BE CH DE FR GB IT LI LU NL SE

(56) Documents cités:
EP-A- 0 028 871
FR-A- 1 187 635
FR-A- 1 286 733
FR-A- 2 228 734
GB-A- 452 644
LU-A- 48 000

(73) Titulaire: CORSTYRENE, Route d'Antisanti,
F-20270 Aleria (FR)
Titulaire: de Veauce, Charles, 5, avenue du Maréchal
Juin, F-92100 Boulogne (FR)
Titulaire: Ansaloni, Bernard, 2 rue Colonel Colonna
d'Ornano, F-20000 Ajaccio (FR)

(72) Inventeur: Ansaloni, Bernard, Immeuble Monte d'Oro
Super Bastia, F-20200 Bastia (FR)
Inventeur: De Veauce, Charles, 5 avenue du Maréchal
Juin, F-92100 Boulogne (FR)

(74) Mandataire: Rinuy, Santarelli, 14, avenue de la Grande
Armée, F-75017 Paris (FR)

ACTORUM AG

## Description

La présente invention concerne des granulats légers, améliorés, convenant dans le domaine du bâtiment et des travaux publics et leur procédé d'obtention.

On entend dans la présente description par granulats légers, tous granulats microporeux de caractère hydrophobe et présentant une densité inférieure à 1, choisis parmi les polystyrènes expansés, copeaux de bois et leurs dérivés agglomérés, charbons de bois et lièges.

On sait que l'on peut incorporer de tels granulats dans les compositions de ciments ou de mortiers. A cet effet il est toutefois nécessaire de faire appel à des adjuvants tels que ceux décrits dans le brevet français n°1286733 qui, par gâchage avec l'eau, pour donner une pâte possèdent la propriété de durcir et d'agglomérer ainsi entre elles les matières inertes entrant dans la composition de ces ciments ou mortiers. Bien que l'on obtienne alors de relativement bons résultats, l'homogénéisation des agrégats dans les bétons ou les mortiers est loin d'être entièrement satisfaisante, malgré l'emploi d'adjuvants spécifiques incorporés soit aux liants hydrauliques soit à l'eau de gâchage.

Or, la présente invention fournit des granulats légers améliorés présentant la propriété de pouvoir se répartir de façon homogène au sein des agrégats constitutifs d'un béton ou mortier, et d'éviter tout emploi d'adjuvant spécifique ou non.

Les granulats selon l'invention sont caractérisés par le fait qu'ils consistent en granulats légers microporeux de caractère hydrophobe et de densité inférieure à 1 et présentant fixée à leur surface par adsorption une substance de nature protéique conférant à cette surface un potentiel électrocinétique négatif.

L'invention vise également un procédé d'obtention de tels granulats, caractérisé par le fait que l'état de surface des granulats microporeux de caractère hydrophobe est modifié par pulvérisation sur lesdits granulats maintenus sous agitation de ladite substance de nature protéique.

Suivant une variante, une telle pulvérisation est effectuée sur lesdits granulats en présence d'au moins une charge minérale (filler) ajoutée au milieu maintenu sous agitation afin d'augmenter la vitesse d'adsorption des molécules protéiques.

Suivant d'autres caractéristiques:
– La substance de nature protéique est un liquide tensioactif naturel ou synthétique choisi parmi les polymères d'acides aminés;
– La charge minérale (filler) est choisie de préférence parmi les électrolytes comprenant les poudres obtenues par broyage fin ou pulvérisation de roches telles que de calcaire de basalte, de laitiers, de bentonite, les cendres volantes, naturelles ou non, ou les hydrates de chaux.

La description qui va suivre fera mieux ressortir la portée et l'intérêt de l'invention.

Une charge de granulats légers inertes microporeux hydrophobes de densité inférieure à 1, choisis parmi les granulats de polystyrène expansé, copeaux de bois et leurs dérivés agglomérés, charbons de bois et lièges est soumise, sous agitation, à température ambiante, à une pulvérisation d'un tensio-actif liquide de nature protéique tel que collagène, gélatine, sang animal, au sein d'un mélangeur, pendant une durée suffisante pour que chaque particule soit enrobée dudit tensio-actif. A la sortie du mélangeur, on constate que ce tensio-actif forme une couche solide à la surface de chaque granule et que cette couche induit un potentiel électrocinétique négatif au granulat ainsi traité et que la réaction d'adsorption est exothermique. Il s'ensuit que, lorsque l'on incorpore le granulat ainsi préalablement traité à une composition servant à la confection d'un béton ou d'un mortier, on constate, après la prise de ce béton ou de ce mortier, une répartition homogène et une bonne cohésion des différents agrégats, et ce, sans faire spécialement appel à un adjuvant tiers.

Ces caractéristiques peuvent encore être améliorées si l'opération de pulvérisation sous agitation est effectuée en présence d'une charge (filler) telle que définie ci-dessus.

On constate dans ce dernier cas une capacité accrue d'adsorption du tensio-actif protéique.

Il va de soi aussi que ce caractère peut varier suivant la porosité du granulat, la température à laquelle se fait la pulvérisation et la durée de contact.

Les exemples suivants sont donnés à titre illustratif de l'invention.

Exemple 1
a) 1000 parties en volume de granulat léger constitué par des billes de polystyrène
b) 0,1 à 10 parties en volume de solution de protéines traitées par voies enzymatiques (sang animal) ou chimiques (collagène ou gélatine) contenant en poids au moins 30% de matières sèches protéiques actives.

On procède comme décrit ci-dessus à une température comprise entre 5 et 40°C. On constate une fixation totale de la substance protéique: les billes résultantes présentent un degré d'hydrométrie relatif inférieur à 50%. De telles billes se répartissent de façon particulièrement homogène lorsqu'elles sont incorporées à des liants hydrauliques.

Exemple 2:
On a reproduit l'exemple 1 mais en ajoutant en plus de 1 à 5 parties en volume d'hydrate de chaux en tant que charge minérale (filler). L'adsorption est également totale mais le degré d'hydrométrie relatif est alors inférieur à 40%.

## Revendications

1. Granulats légers convenant dans le domaine du bâtiment et des travaux publics, caractérisés par le fait qu'ils consistent en granulats microporeux de caractère hydrophobe de densité inférieure à 1 et présentant, fixée à leur surface par adsorption, une substance de nature protéique, conférant à cette surface un potentiel électrocinétique négatif, choisie parmi les liquides tensio-actifs de solutions de protéines traités par voie enzymatique ou chimique.

2. Granulats selon la revendication 1, caractérisés par le fait qu'ils sont choisis parmi les polystyrènes expansés, copeaux de bois et leurs dérivés agglomérés, charbons de bois et lièges.

3. Granulats selon la revendication 1 ou 2 caractérisés en ce que lesdites solutions de protéines consistent en sang animal ou en collagène ou gélatine traités par voie enzymatique ou chimique.

4. Procédé d'obtention de granulats légers selon l'une quelconque des revendications 1 à 3, caractérisé par le fait qu'il consiste à modifier l'état de surface de granulats microporeux de caractère hydrophobe par pulvérisation de la substance de nature protéique sur lesdits granulats maintenus sous agitation.

5. Procédé selon la revendication 4, caractérisé par le fait que ladite pulvérisation est effectuée sur lesdits granulats en présence d'au moins une charge minérale (filler) ajoutée au milieu maintenu sous agitation.

6. Procédé selon la revendication 5, caractérisé par le fait que la charge minérale (filler) est choisie parmi les poudres obtenues par broyage fin ou pulvérisation de roches telles que de calcaire, de basalte, de laitiers, de bentonite, les cendres volantes ou les hydrates de chaux.

## Patentansprüche:

1. Leichte Granulate, geeignet auf dem Gebiet des Bauwesens und der öffentlichen Bauarbeiten, dadurch gekennzeichnet, dass sie aus mikroporösen Granulaten mit hydrophobem Charakter und mit einer Dichte von weniger als 1 bestehen und auf ihrer Oberfläche eine Proteinsubstanz durch Absorption fixiert aufweisen, die dieser Oberfläche ein negatives elektrokinetisches Potential verleiht, ausgewählt aus den enzymatisch oder chemisch behandelten flüssigen oberflächenaktiven Proteinlösungen.

2. Granulate nach Anspruch 1, dadurch gekennzeichnet, dass sie ausgewählt sind aus expandierten Polystyrolen, Holzspänen und deren agglomerierten Derivaten, Holzkohlen und Korken.

3. Granulate nach Anspruch 1 oder 2, dadurch gekennzeichnet, dass die Proteinlösungen aus Tierblut oder Kollagen oder enzymatisch oder chemisch behandelter Gelatine bestehen.

4. Verfahren zum Herstellen von leichten Granulaten nach einem der Ansprüche 1 bis 3, dadurch gekennzeichnet, dass man die Oberflächenbeschaffenheit der mikroporösen Granulate mit hydrophobem Charakter durch Aufsprühen der Proteinsubstanz auf die unter Rühren gehaltenen Granulate modifiziert.

5. Verfahren nach Anspruch 4, dadurch gekennzeichnet, dass das Aufsprühen auf die Granulate in Anwesenheit mindestens einer Mineralcharge (Füllstoff), die dem unter Rühren gehaltenen Medium zugesetzt wird, bewirkt wird.

6. Verfahren nach Anspruch 5, dadurch gekennzeichnet, dass die Mineralcharge (Füllstoff) ausgewählt wird aus Pulvern erhalten durch feines Zerkleinern oder Pulverisieren von Gestein, wie Kalk, Basalt, Schlacken, Bentonit, Flugaschen oder Kalkhydraten.

## Claims

1. Light aggregates suitable for use in the building and civil engineering fields, characterized by the fact that they consist of hydrophobic microporous aggregates having a density less than 1 and comprising a substance of proteinaceous nature, fixed to their surface by adsorption, which gives this surface a negative electrokinetic potential and is chosen from the surface-active liquids which are enzymatically or chemically treated protein solutions.

2. Aggregates according to Claim 1, characterized by the fact that they are chosen from expanded polystyrenes, wood chips and their agglomerated derivatives, wood charcoals and corks.

3. Aggregates according to Claim 1 or 2, characterized in that the said protein solutions consists of animal blood or of collagen or gelatine treated enzymatically or chemically.

4. A process for obtaining light aggregates according to any one of Claims 1 to 3, characterized by the fact that it consists in modifying the surface state of the hydrophobic microporous aggregates by spraying the substance of proteinaceous nature on the said aggregates which are kept stirred.

5. A process according to Claim 4, characterized by the fact that the said spraying is performed on the said aggregates in the presence of at least one inorganic additive (filler) added to the medium which is kept stirred.

6. A process according to Claim 5, characterized by the fact that the inorganic additive (filler) is chosen from the powders obtained by fine crushing or pulverization of rocks such as limestone, basalt, slags, bentonite, fly-ashes or hydrated limes.